# EUROPEAN PATENT APPLICATION

(11) **EP 4 592 018 A1**
(43) Date of publication of application: **30.07.2025**
(21) Application number: 23900686.9
(22) Date of filing: 06.12.2023
(51) Int. Cl.: B23K 26/21, B23K 26/211, B23K 26/323

(54) **LASER WELDING DEVICE, AND LASER WELDING METHOD**

(30) Priority: 09.12.2022 JP 2022197265
(71) Applicant: Okayama University, Okayama-shi, Okayama 700-8530 (JP); Kataoka Corporation, Kyoto-shi, Kyoto 601-8203 (JP)
(72) Inventor: OKAMOTO Yasuhiro, Okayama-shi, Okayama 700-8530 (JP); NAGASAKI Katsutoshi, Kyoto-shi, Kyoto 601-8203 (JP); YAMAMURA Takeshi, Kyoto-shi, Kyoto 601-8203 (JP); HAYASHI Keisuke, Kyoto-shi, Kyoto 601-8203 (JP)
(74) Representative: Seemann & Partner Patentanwälte mbB
(86) International application number: PCT/JP2023/043630
(87) International publication number: WO 2024/122574

(57) **Abstract**

A laser welding method for welding a first base material (8) and a second base material (9) that overlap each other by scanning a laser beam along a scanning direction L, in which the second base material (9) is different in material and type from the first base material (8), and an insert material (10) having a base material and a minute penetration space provided in the base material is interposed between the first base material (8) and the second base material (9).

## Description

### TECHNICAL FIELD

The present disclosure relates to a device and a method for laser welding two base materials of different materials or different types.

### BACKGROUND ART

A laser welding technique is known in which welding is performed by irradiating two types of base materials with a laser beam and heating and melting the base materials to weld the base materials. For example, the following Patent Literature discloses that an aluminum material is irradiated with a laser beam in welding two dissimilar metal base materials of an aluminum material and a copper material.

### CITATION LIST

### PATENT LITERATURE

Patent Literature 1: JP2015-211981A

### SUMMARY OF INVENTION

### TECHNICAL PROBLEM

In general, in laser welding between dissimilar metals, since a hard and brittle intermetallic compound is often generated in a molten portion, it is known that joint strength is significantly reduced, and brittle fracture behavior occurs as compared with welding between similar metals. For example, when the aluminum material and the copper material are welded to each other, brittle CuAl₂ having a high aluminum content is easily generated. In particular, in a case where a copper material having a high melting point is superimposed on an aluminum material having a relatively low melting point, and the laser beam is emitted from the copper material to perform welding, this problem is apparent.

An object of the present disclosure is to reliably laser weld two base materials of different materials or different types and improve joint strength.

### SOLUTION TO PROBLEM

A laser welding method according to one aspect of the present disclosure is a laser welding method for welding a first base material and a second base material that overlap each other by scanning a laser beam along a scanning direction,
the second base material is different in material and type from the first base material, and
an insert material having a base material and a minute penetration space provided in the base material is interposed between the first base material and the second base material.

The laser beam may be radiated toward a surface of the first base material (outer surface exposed to the first base material, that is, surface opposite to the insert material and the second base material). However, the laser welding method according to the present disclosure is not limited thereto. For example, the laser beam is not prevented from being radiated toward a surface of the second base material (outer surface exposed to the second base material, that is, surface opposite to the insert material and the first base material).

In particular, a melting point of the insert material is preferably higher than a melting point of each of the first base material and the second base material. Ductility of the insert material is preferably higher than that of an intermetallic compound that may be generated between the first base material and the second base material.

The first base material and the second base material are often plate-shaped. A thickness of the insert material is thinner than a thickness of the first base material and thinner than a thickness of the second base material.

The insert material typically has a mesh shape, and the minute penetration space is a mesh.

The first base material is, for example, copper or an alloy containing copper. The second base material is, for example, aluminum or an alloy containing aluminum. The insert material is, for example, nickel or an alloy containing nickel.

A keyhole formed by radiating the laser beam does not penetrate the first base material. It is preferable to adjust the output of the laser beam to such a degree. That is, when the first base material is irradiated with the laser beam, the second base material is not directly irradiated with the laser beam.

The laser welding method according to the present disclosure is a method in which a first base material, a second base material that is different in material or type from the first base material, and an insert material having a minute penetration space interposed between the first base material and the second base material are superimposed on each other, and surfaces of the first base material and the second base material are irradiated with laser beam to weld the two base materials.

### ADVANTAGEOUS EFFECTS OF INVENTION

According to the present disclosure, it is possible to reliably laser weld two base materials of different materials or different types and improve joint strength.

### BRIEF DESCRIPTION OF DRAWINGS

FIG. 1 is a diagram showing a configuration of a laser processing device that performs a laser welding method according to an embodiment of the present disclosure.
FIG. 2 is a cross-sectional view showing a target of laser welding on which the laser welding method according to the present disclosure is performed.
FIG. 3 is a plan view showing a structure of an insert material used in the laser welding method according to the present disclosure.
FIG. 4 is a cross-sectional view showing a pattern of laser welding in the laser welding method according to the present disclosure.

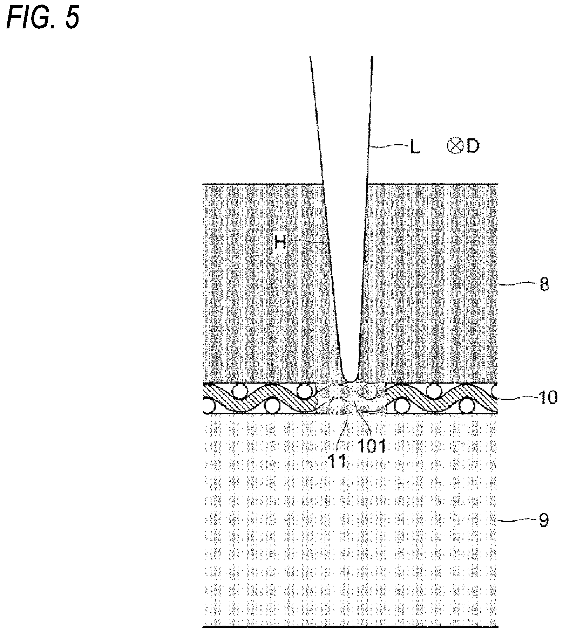

FIG. 5 is a cross-sectional view showing a pattern of laser welding in the laser welding method according to the present disclosure, as viewed along a scanning direction of a laser beam.
FIG. 6 is a diagram showing a pattern in which a first base material is melted by laser welding according to the laser welding method according to the present disclosure and flows into a minute penetration space of the insert material.
FIG. 7 is a perspective view showing a breaking tester for measuring joint strength between base materials welded by the laser welding method according to the present disclosure.

### DESCRIPTION OF EMBODIMENTS

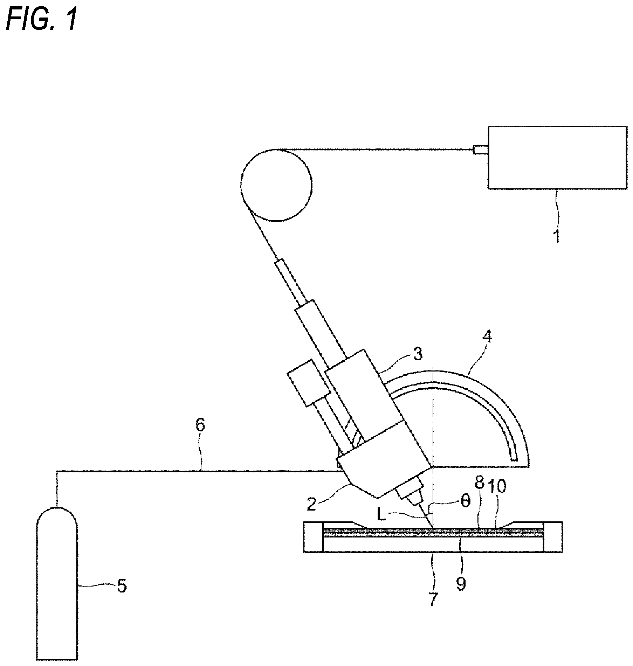

An embodiment of the present disclosure will be described with reference to the drawings. A laser welding device shown in FIG. 1 is capable of executing a laser welding method according to the present disclosure, and is a device for laser welding a first base material 8 which is a metal plate on a second base material 9 which is also a metal plate by superimposing the first base material 8 on the second base material 9. The first base material 8 and the second base material 9 are different dissimilar metals, and a melting point of the first base material 8 is higher than a melting point of the second base material 9. The first base material 8 is, for example, copper or an alloy containing copper. The second base material 9 is, for example, aluminum or an alloy containing aluminum.

As shown in FIG. 1, the laser welding device used in the present embodiment includes a laser source (oscillator) 1, a processing nozzle 2 that irradiates the first base material 8 with a laser beam L supplied from the laser source 1 to the first base material 8 and the second base material 9 to be welded, a unit 3 that includes an optical system that propagates the laser beam L emitted from the laser source 1 to the processing nozzle 2 and supports the processing nozzle 2, an angle adjustment mechanism 4 that can variably adjust a posture, that is, an angle θ of the unit 3 and the processing nozzle 2 with respect to the first base material 8 and the second base material 9, a gas cylinder 5 that stores a shielding gas, a gas flow path 6 that guides, to the processing nozzle 2, the shielding gas discharged from the gas cylinder 5, and a support 7 that supports the first base material 8 and the second base material 9 (as a laminated body which also includes an insert material 10 being interposed between the first base material 8 and the second base material 9).

The processing nozzle 2 incorporates a light collecting lens (or an objective lens) that collects the laser beam L to be emitted to the first base material 8 and the second base material 9. An optical system of the unit 3 is configured by combining known optical elements such as an optical fiber, a mirror, and a lens. The lens is for shaping a projected shape (spot shape) of the laser beam L into a desired shape, and includes a cylindrical lens, a collimating lens, and the like.

The angle adjustment mechanism 4 can adjust, to a desired magnitude, an angle θ of an optical axis of the laser beam L emitted from the processing nozzle 2 with respect to a normal line to a surface of the first base material 8. Although described later, in the present embodiment, θ is not 0°. That is, the optical axis of the laser beam L is not orthogonal to the surface of the first base material 8 and is tilted backward with respect to the surface of the first base material 8.

The shielding gas supplied from the gas cylinder 5 to the processing nozzle 2 through the gas flow path 6 is for protecting molten metal so that molten metal does not react with oxygen or hydrogen in the air, and is, for example, chemically stable nitrogen or argon. The shielding gas is ejected from the processing nozzle 2 toward the surface of the first base material 8 during laser welding. The gas flow path 6 may include an easily deformable flexible tube (or hose).

In addition, in the laser welding device, a drive mechanism (not shown) capable of displacing the unit 3 and the processing nozzle 2 in a predetermined direction relative to the first base material 8 and the second base material 9 to be welded is additionally provided. A specific configuration of the drive mechanism is optional, and a plurality of modes are conceivable. For example, the support 7 supporting the first base material 8 and the second base material 9 may be mounted on a stage having a linear motor cart or the like, and the support 7 may be movable in a direction parallel to a surface of the first base material 8 by the stage. Conversely, the unit 3 supporting the processing nozzle 2 may be mounted on a stage having a linear motor cart or the like, and the unit 3 may be movable in a direction parallel to the surface of the first base material 8 by the stage. In the present disclosure, the angle adjustment mechanism 4 and the drive mechanism constitute a scanning mechanism.

Next, a laser welding method according to the present disclosure performed by the above-described laser welding device will be described in detail.

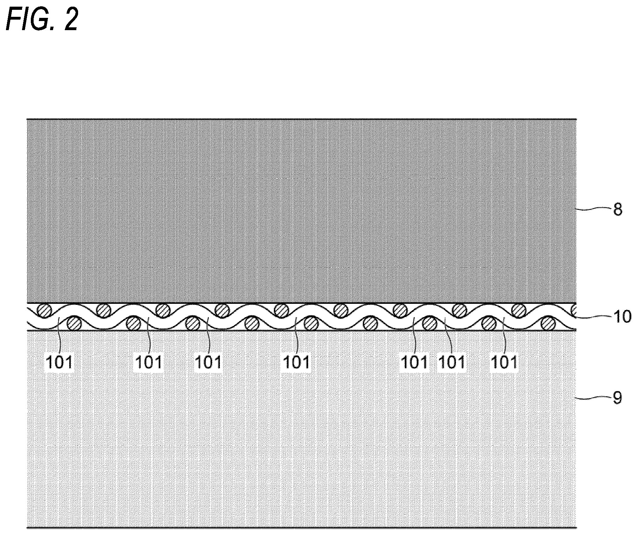

In the laser welding method according to the present disclosure, when the first base material 8 and the second base material 9 are laser welded, as shown in FIG. 2, the insert material 10 made of a dissimilar metal from the first base material 8 and the second base material 9 is sandwiched between the first base material 8 and the second base material 9 in advance. Then, the surface of the first base material 8 (outer surface exposed to the first base material, that is, surface opposite to the insert material 10 and the second base material 9) is irradiated with the laser beam L to weld the first base material 8 and the second base material 9. In the present disclosure, a thickness of the insert material 10 interposed between the first base material 8 and the second base material 9 (along a direction in which the first base material 8, the insert material 10, and the second base material 9 overlap each other) is smaller than a thickness of the first base material 8 and a thickness of the second base material 9.

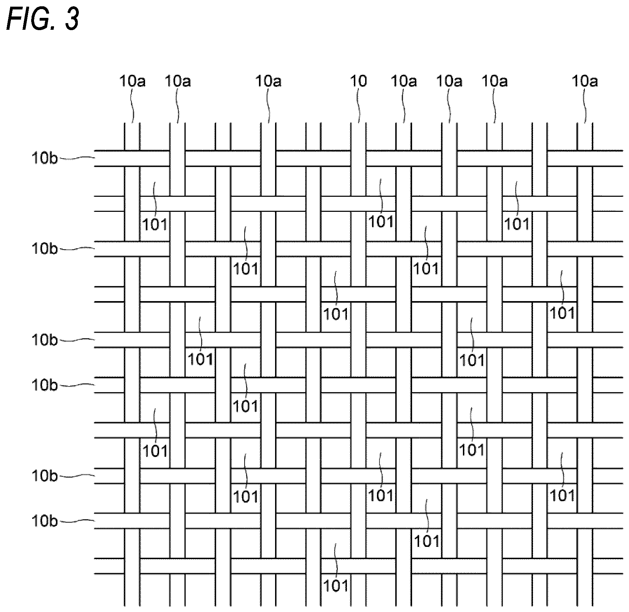

The insert material 10 used in the present embodiment is shown in FIG. 3. The insert material 10 includes a plurality of or many minute penetration spaces 101. Each of the minute penetration spaces 101 is a space that penetrates the insert material 10 along a direction in which the first base material 8 and the second base material 9 to be welded face each other, and is a space that communicates between a back surface of the first base material 8 (surface opposite to a front surface irradiated with the laser beam L) and a surface of the second base material 9 facing the back surface of the first base material 8. The insert material 10 is, for example, a mesh material in which a plurality of metal wires 10a extending parallel to each other in a predetermined direction (longitudinal direction in FIG. 3) and a plurality of metal wires 10b extending parallel to each other in a direction intersecting with the metal wires 10a are integrated into a mesh shape. In the present embodiment, meshes 101 of the mesh material correspond to the minute penetration spaces.

In the above-described embodiment, a shape and structure of the insert material 10 are the meshes 101 of the mesh material, but the insert material 10 disclosed herein is not limited thereto. For example, the insert material 10 may have a shape that is not a net-like shape or a structure in which a large number of metal wires extending in a predetermined direction and parallel to each other are used as a base material. In this case, a gap between the wires extending in parallel corresponds to the minute penetration space. Alternatively, the insert material 10 may be a punched metal thin plate in which a plurality of through holes are formed in a metal thin plate. In this case, a through hole formed in the metal thin plate corresponds to the minute penetration space. Alternatively, a minute metal material such as a cut metal thin film may be disposed to be scattered at an interface between the first base material 8 and the second base material 9, and the metal materials may be used as the insert material 10. In this case, a gap between the metal material and the metal material corresponds to the minute penetration space.

In the present disclosure, the insert material 10 is made of a dissimilar metal from the first base material 8 and the second base material 9. The insert material 10 is, for example, nickel or an alloy containing nickel. A melting point of the insert material 10 is higher than the melting point of the first base material 8 and higher than the melting point of the second base material 9. Furthermore, the ductility of the insert material 10 is higher than the ductility of an intermetallic compound (for example, CuAl₂ in the case of welding of the copper 8 and the aluminum 9) that may be generated between the first base material 8 and the second base material 9 due to welding. The insert material 10 is not limited to nickel or an alloy containing nickel, and may adopt, for example, titanium or an alloy containing titanium.

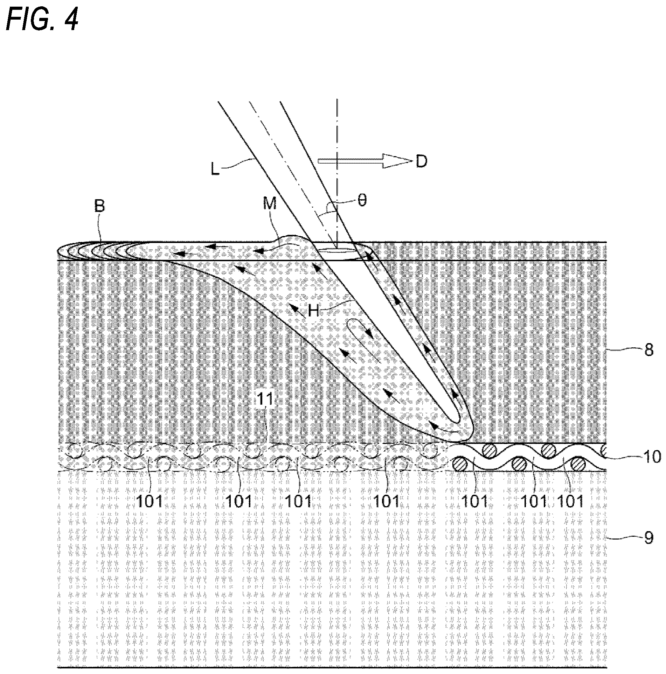

Next, laser irradiation in the laser welding method according to the present disclosure will be described in detail with reference to FIG. 4.

As shown in FIG. 4, in the present embodiment, scanning is performed by moving the laser beam L relative to the first base material 8 along a predetermined direction, that is, a scanning direction D parallel to the surface of the first base material 8 while maintaining a posture in which the optical axis of the laser beam L is tilted backward with respect to the surface of the first base material 8. A keyhole H is formed in the first base material 8 irradiated with the laser beam L. In the present embodiment, the keyhole H does not penetrate the first base material 8 and does not penetrate into the second base material 9 by adjusting irradiation conditions of the laser. The irradiation conditions to be adjusted include, for example, a wavelength of the laser beam L, an output of the laser beam L, a projected shape and dimension (spot diameter) on the surface of the first base material 8, a scanning speed along the scanning direction D, and the angle θ of the optical axis. Each of the above-described conditions is a condition that affects an absorbed energy amount (energy density) per unit area of the first base material 8 and the second base material 9.

The wavelength of the laser beam L depends on the types of the first base material 8 and the second base material 9, and is, for example, a near-infrared laser. The type of the laser is not limited to the near-infrared laser, and for example, a plurality of laser beams may be used in combination, such as irradiating the first base material 8 with the laser beam L formed by superimposing a near-infrared laser and a blue laser. The laser beam L may be a continuous wave laser or a pulse laser.

Whether the keyhole H formed when the laser beam L is emitted penetrates the first base material 8 can be experimentally confirmed. For example, the molten metal and the keyhole H generated at the time of laser welding are photographed by a high-speed camera capable of photographing the molten metal and the keyhole H at a high resolution and a high frame rate, and an amount of spatter on the surface of the first base material 8 is checked from the photographed image (still image or moving image). In order to make a more accurate determination, after the first base material 8 alone is irradiated with the laser beam L, a cross section of the first base material 8 may be observed to confirm that the keyhole H does not penetrate the first base material 8.

In the present disclosure, the optical axis of the laser beam L is inclined backward along the scanning direction D. At this time, the angle θ at which the optical axis intersects the normal line of the surface of the first base material 8 is set to a push angle within a range of 15° to 50°. More preferably, the angle θ at which the optical axis intersects the normal line of the surface of the first base material 8 is 30°. As a result, the keyhole H that does not penetrate the first base material 8 may be formed during laser welding.

The keyhole H formed in the first base material 8 is inclined from a rear side toward a front side along the scanning direction D as the keyhole H approaches (becomes deeper) the second base material 9. A part of the laser beam L emitted to the first base material 8 hits a wall on a front side of the keyhole H and is estimated to be reflected downward toward the second base material 9 or toward a wall on a rear side.

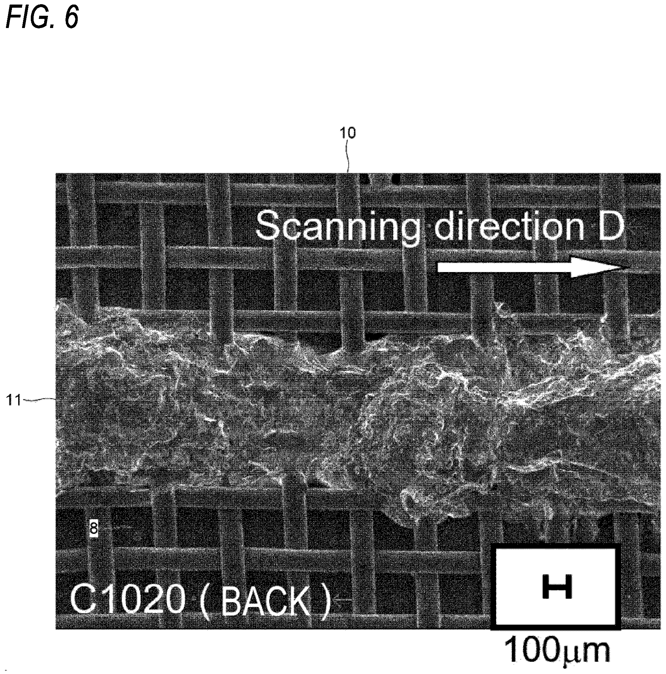

FIG. 6 is a photograph obtained by actually photographing a pattern in which the surface of the first base material 8 is irradiated with the laser beam L, the first base material 8 is melted, and the molten metal 11 flows into the minute penetration space of the insert material 10 (mesh material) made of nickel. In FIG. 6, the insert material 10 and the first base material 8 are photographed from a back surface side of the first base material 8. The melted first base material 8 enters the minute penetration space and is stuck to the insert material 10 constituting the mesh material.

Further, the molten metal of the first base material 8 reaching the surface of the second base material 9 through the minute penetration space of the insert material 10 is joined to the second base material 9 to form a welded joint.

In the related art, in a case where two base materials of different materials or different types are laser welded, joint strength may be reduced due to the formation of a hard and brittle intermetallic compound in a molten portion.

According to the laser welding method of the present disclosure, the optical axis of the laser beam L is tilted backward with respect to the surface of the first base material 8, and thus it is possible to prevent the keyhole H from penetrating the first base material 8. Accordingly, it is possible to reduce an irradiation amount of the laser beam L directly irradiated to the second base material 9. According to the configuration described above, the second base material 9 is melted due to the conduction of the heat generated by the first base material 8 absorbing the energy of the laser beam L, so that it is possible to reduce a region where a brittle intermetallic compound is generated at the boundary between the first base material 8 and the second base material 9.

Molten metal M of the first base material 8 flows in a direction opposite to the scanning direction as indicated by a short arrow in FIG. 4. Therefore, not only a state of a bead B appearing on the surface of the first base material 8 becomes good, but also a spatter becomes extremely small. Porosities (generic terms of welding defects such as blowholes (cavities) generated in the weld metal and pits having holes up to the surface) are less likely to occur.

As described above, when an appropriate push angle θ is provided for the optical axis of the laser beam L, a length of the molten region increases even with the same size of the keyhole H, and a good molten pool flow can be formed even with the first base material 8 having a large thermal conductivity and a large cooling rate, and a phenomenon in which the molten metal M behind the keyhole H covers and blocks the keyhole H is less likely to occur.

When the optical axis of the laser beam L is substantially perpendicular to the surface of the first base material 8, that is, the angle θ is set to approximately 0°, the keyhole H is more likely to penetrate the first base material 8 and penetrate the second base material 9. Accordingly, a fragile intermetallic compound is easily generated at the boundary between the first base material 8 and the second base material 9. A larger amount of the molten metal M flows upward, that is, toward the surface of the first base material 8, and a state of the bead B appearing on the surface of the first base material 8 deteriorates, and a spatter or a porosity is likely to occur.

Further, in the laser welding method according to the present disclosure, the insert material 10 having the minute penetration space 101 is interposed between the first base material 8 and the second base material 9 to be welded. The insert material 10 used in the laser welding method according to the present disclosure has a higher melting point than the first base material 8 and the second base material 9. In a process in which the first base material 8 and the second base material 9 are melted and joined and re-solidified, a part or all of the mesh of the insert material 10 remains in a solid phase state without being melted. In addition, the insert material 10 has higher ductility than an intermetallic compound that may be generated at a boundary between the first base material 8 and the second base material 9. Accordingly, even if an intermetallic compound is generated in the process of laser welding, the insert material 10 prevents breakage due to cleavage caused by the intermetallic compound, thereby further improving the breaking strength of the welded joint.

When the brittle intermetallic compound generated between the first base material 8 and the second base material 9 starts to be broken by welding, the breakage proceeds continuously and a welded portion may be broken immediately. However, when the laser welding method according to the present embodiment is adopted, it is possible to further prevent the breakage of the intermetallic compound due to cleavage to the insert material 10 having high ductility remaining between the first base material 8 and the second base material 9.

An increase in the glossiness appearing on the surface of the first base material 8 is also included as an effect of the mesh-like insert material 10. Since the insert material 10 covers the minute penetration space 101 and the molten first base material 8 flows into the minute penetration space 101, a surface of a weld bead B is located at the same height position as a surface of a peripheral portion adjacent to the weld bead B, or the surface of the weld bead B is slightly lower. Accordingly, large reflected light is also obtained from the surface of the bead B, and the bead B becomes glossy. Further, a surface roughness of the bead B is also reduced.

The present disclosure is not limited to the embodiment described above in detail. For example, the angle θ of the optical axis of the laser beam L may be set to be approximately 0°, or the keyhole H may reach a side of the second base material 9 which is not directly irradiated with the laser beam L by increasing the output of the laser beam L.

Hereinafter, an example of welding using the laser welding method according to the present embodiment will be described. The first base material 8 to be welded is a thin plate of oxygen-free copper (C1020), and the second base material 9 is a thin plate of pure aluminum (A1050). The laser beam L to be used is a continuous wave laser having a wavelength of 1080 nm. The angle θ of the optical axis of the laser beam L was set to a push angle of 30°. In order to weld the first base material 8 and the second base material 9, scanning with the laser beam L was performed so that five beads B parallel to each other were formed at the welded portions.

A difference between the following Examples and Comparative Examples is only a condition of the insert material 10 used for laser welding. Other conditions are the same in all Examples and Comparative Examples.
Example 1: Nickel mesh material having a wire diameter of 100 µm. An aperture ratio was 58.3% (60 wires were arranged per inch width).
Example 2: Nickel mesh material having a wire diameter of 100 µm. The aperture ratio was 36.8% (100 wires were arranged per inch width).
Example 3: Nickel mesh material having a wire diameter of 50 µm. The aperture ratio was 36.8% (200 wires were arranged per inch width).
Comparative Example 1: Nickel foil having a thickness of 50 µm. Comparative Example 2 in which no minute penetration space is present (no opening): no insert material is used (no insert material is sandwiched between two base materials)

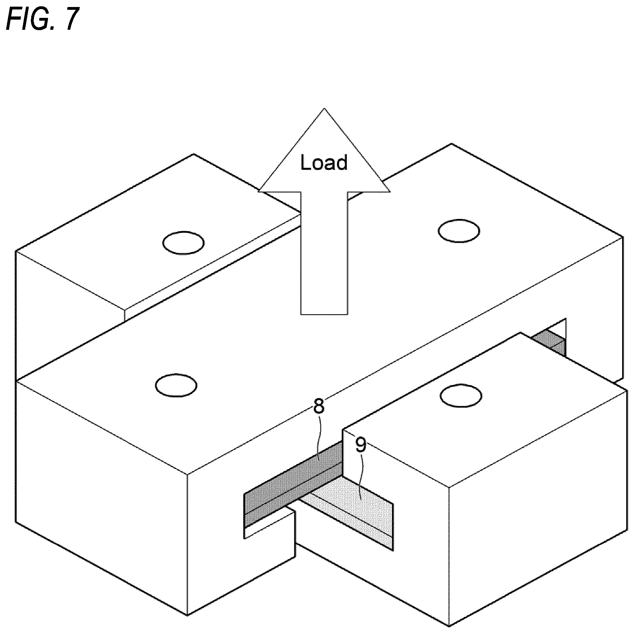

The first base material 8 and the second base material 9 that are laser welded under the respective conditions described above were set in a breaking tester as shown in FIG. 7, and a breaking test was performed to apply a load (load) to peel the first base material 8 from the second base material 9 along a direction perpendicular to a joint surface (interface) of the two base materials. In the breaking test, the magnitude of the load when the breakage occurs in the joint surface by welding is measured.

The measurement was performed three times for each of Examples and Comparative Examples, and an average value of the three times was obtained. The magnitude of an average load when breakage occurred was as follows.
Example 1: 730 N
Example 2: 856 N
Example 3: 685 N
Comparative Example 1: 499 N
Comparative Example 2: 339 N

When Examples 1 to 3 in which the nickel mesh material is used as the insert material 10 is compared with Comparative Example 2 in which the insert material 10 is not used, the breaking strength is clearly higher in Examples 1 to 3. In addition, when Examples 1 to 3 are compared with Comparative Example 1 using nickel foil as the insert material 10, breaking strength is higher in Examples 1 to 3. Thus, it was confirmed that the copper material and the aluminum material can be firmly welded by laser welding using the nickel mesh material.

In order to prevent the breakage due to cleavage, it is preferable to appropriately set the wire diameters of the metal wires 10a and 10b constituting the insert material 10 and an aperture ratio of the insert material 10. In view of the results in Example 2, it is preferable that the wire diameter is larger than or equal to a certain value and the aperture ratio is smaller than or equal to a certain value. However, the aperture ratio of the insert material 10 can be appropriately selected from two viewpoints of a size of an opening necessary for guiding the melted first base material 8 to the second base material 9 through the minute penetration space and the ductility of the insert material 10.

In the above embodiment, the laser beam L is radiated to copper or copper alloy as the first base material 8, and the laser beam L may be radiated to aluminum or aluminum alloy as the second base material 9.

In addition, the specific configuration of each unit, the procedure of processing, and the like can be variously modified without departing from the gist of the present invention.

The present application is based on Japanese Patent Application No. 2022-197265 filed on December 9, 2022, and the contents thereof are incorporated herein by reference.

## Claims

1. A laser welding method for welding a first base material and a second base material that overlap each other by scanning a laser beam along a scanning direction,
wherein the second base material is different in material and type from the first base material, and
wherein an insert material having a base material and a minute penetration space provided in the base material is interposed between the first base material and the second base material.

2. The laser welding method according to claim 1,
wherein the insert material has a melting point higher than a melting point of each of the first base material and the second base material.

3. The laser welding method according to claim 1 or 2,
wherein the insert material has a thickness smaller than a thickness of each of the first base material and the second base material.

4. The laser welding method according to claim 1 or 2,
wherein the insert material has higher ductility than an intermetallic compound that may be generated between the first base material and the second base material.

5. The laser welding method according to claim 1 or 2,
wherein the minute penetration space of the insert material is formed by the base material having a mesh shape.

6. The laser welding method according to claim 1,
wherein the first base material is copper or an alloy containing copper,
wherein the second base material is aluminum or an alloy containing aluminum, and
wherein the insert material is nickel or an alloy containing nickel.

7. The laser welding method according to claim 1 or 2,
wherein a keyhole formed by radiating the laser beam does not penetrate the first base material.

8. A laser welding device for welding the first base material and the second base material by the laser welding method according to claim 1 or 2.

9. The laser welding device according to claim 8, further comprising:
a support configured to support a laminated body including the first base material and the second base material that overlap each other with the insert material having a minute penetration space being interposed between the first base material and the second base material;
a processing nozzle configured to radiate the laser beam to the superimposed first base material, the insert material, and the second base material; and
an operation mechanism configured to scan the processing nozzle in a welding direction while the processing nozzle is tilted backward with respect to the support.
